# EUROPÄISCHE PATENTSCHRIFT

(11) **EP 2 204 704 B1**
(45) Veröffentlichungstag und Bekanntmachung des Hinweises auf die Patenterteilung: **30.01.2013**
(21) Anmeldenummer: 08022538.6
(22) Anmeldetag: 31.12.2008
(51) Int. Cl.: G05B 19/042, G05B 19/418

(54) **Verfahren zum Betrieb eines mehrere vernetzte Rechnereinheiten umfassenden industriellen Automatisierungsystems und industrielles Automatisierungsystem**
Method for operating an industrial automation system comprising multiple networked computing units and industrial automation system
Procédé de fonctionnement d'un système d'automatisation industriel comprenant plusieurs unités de calcul en réseau et système d'automatisation industriel

(43) Veröffentlichungstag der Anmeldung: 07.07.2010
(73) Patentinhaber: Siemens Aktiengesellschaft, 80333 München (DE)
(72) Erfinder: Nitzsche, Stefan, 67227 Frankenthal (DE); Wigger, Frank, 76149 Karlsruhe (DE)

(56) Entgegenhaltungen:
- EP-A- 1 643 679
- EP-A- 1 710 647
- WO-A-03/056423
- WO-A-2007/110006
- DE-A1- 10 229 879

## Beschreibung

Industrielle Automatisierungssysteme dienen zur Überwachung, Steuerung und Regelung von technischen Prozessen, insbesondere im Bereich Fertigungs- und Prozeßautomatisierung, und ermöglichen einen Betrieb von Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Rechnereinheiten umfassen, gewinnen Verfahren zur zuverlässigen Konfigurierung und Aktivierung von verteilten Diensten für eine Bereitstellung von Überwachungs-, Steuerungs- und Regelungsfunktionen verstärkt an Bedeutung. Entsprechend bisherigen Lösungsansätzen werden Konfigurationsdaten in verteilten Automatisierungssystemen durch gerätespezifische Konfigurierungssysteme bereitgestellt und für eine Aktivierung eines lokalen Dienstes verwendet. Zudem erfolgt auf eine Bereitstellung von Konfigurationsdaten bisher ohne weitere Überprüfung eine umgehende Aktivierung des jeweiligen lokalen Dienstes. Bei verteilten Diensten, deren Dienstkomponenten durch mehrere unterschiedliche Rechnereinheiten bereitgestellt werden, kann eine unkoordinierte Konfigurierung und Aktivierung von Einzelsystemen zu problematischen Inkonsistenzen führen, welche die fehlerfreie Bereitstellung eines Dienstes gefährden und sich nachteilig auf Systemstabilität und - verfügbarkeit auswirken.

Aus EP 1 710 647 A ist eine Integration von Feldgeräten in ein Automatisierungssystem bekannt, wobei für jeden Feldgerätetyp eine Softwarekomponente bereitgestellt wird, welche speziell auf den Feldgerätetyp ausgerichtet ist und vom Hersteller mitgeliefert wird. Die Softwarekomponente kann dabei Engineering- Daten, wie Parameter, Konfigurationsinformationen, Zugriffsinformationen oder historische Prozessdaten enthalten. Diese Software ist zur Konfiguration des Feldgerätes vorgesehen und wird als "device type manager" bezeichnet, zur Programmierung des Feldgerätes vorgesehen ist, um eine Integration des Feldgerätes in das Automatisierungssystem durchführen zu können.

WO 2007/110006 offenbart ein Feldgerät für energietechnische Anlagen, welche eine Sicherungseinrichtung aufweist, welche sicherstellt, dass eine gewünschte Gerätefunktion nur ausgeführt wird, wenn es sich um eine für das Gerät genehmigte Funktion handelt.

Der vorliegenden Erfindung liegt daher die Aufgabe zugrunde, ein Verfahren zum Betrieb eines mehrere vernetzte Rechnereinheiten umfassenden Automatisierungssystems anzugeben, das eine konsistente und zuverlässige Bereitstellung von verteilten Diensten ermöglicht, sowie ein zur Durchführung des Verfahrens geeignetes Automatisierungssystem zu schaffen.

Diese Aufgabe wird erfindungsgemäß durch ein Verfahren mit den in Anspruch 1 angegebenen Merkmalen und durch ein Automatisierungssystem mit den in Anspruch 11 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren werden Funktionen eines mehrere vernetzte Rechnereinheiten umfassenden Automatisierungssystems durch Dienste von den Rechnereinheiten bereitgestellt. Die Dienste werden mittels Systemkonfigurationsdaten und Dienstkonfigurationsdaten konfiguriert und aktiviert. Die Systemkonfigurationsdaten umfassen Informationen zur Zuordnung von Diensten zu bereitstellenden Rechnereinheiten und zu Abhängigkeiten zwischen Diensten. Die Systemkonfigurationsdaten werden durch einen ersten Dienst von einer Steuerungs- und Überwachungseinheit des Automatisierungssystems übernommen, überprüft und an Ziel-Rechnereinheiten weitergeleitet.

Die Steuerungs- und Überwachungseinheit kann beispielsweise ein Engineering-System zur Konfiguration, Wartung, Inbetriebnahme und/oder Dokumentation des Automatisierungssystems sein. Die Systemkonfigurationsdaten werden entsprechend dem erfindungsgemäßen Verfahren durch von den Ziel-Rechnereinheiten bereitgestellte zweite Dienste überprüft und zur Bereitstellung von Ressourcen verwendet, die für eine Aktivierung lokaler Dienste benötigt werden. Die Dienstkonfigurationsdaten werden nach einer erfolgreichen Systemkonfiguration an die Ziel-Rechnereinheiten übermittelt. Ein lokaler Dienst wird durch eine diesem zugeordnete Ziel-Rechnereinheit anhand der Dienstkonfigurationsdaten aktiviert. Aufgrund einer Unterteilung in eine Bereitstellung von System- und Dienstkonfigurationsdaten sowie in eine Dienstaktivierung unter Verwendung geprüfter, Dienstabhängigkeiten berücksichtigender Konfigurationsdaten ermöglicht das erfindungsgemäße Verfahren eine zuverlässige und konsistente Konfigurierung und Aktivierung von Diensten in einem Automatisierungssystem.

Bei einer bevorzugten Ausgestaltung der vorliegenden Erfindung werden für eine Aktivierung eines lokalen Dienstes in einer Vorbereitungsphase zunächst die Dienstkonfigurationsdaten geladen. Der lokale Dienst wird dann in einer Abschlußphase unter Verwendung der in der Vorbereitungsphase geladenen Dienstkonfigurationsdaten bereitgestellt. Bei einem Fehlschlagen der Vorbereitungs- bzw. Abschlußphase wird der lokale Dienst, der beispielsweise auf mehrere Rechnereinheiten verteilte Dienstkomponenten umfassen kann, in einer Zurücksetzphase unter Verwendung von Dienstkonfigurationsdaten bereitgestellt, die einem letzten fehlerfreien Status zugeordnet sind. Auf diese Weise kann insbesondere ein partielles Fehlschlagen einer Übernahme geänderter Konfigurationsdaten nicht zu Dienstfehlfunktionen aufgrund einer inkonsistenten Dienstkonfiguration führen.

Vorteilhafterweise werden zur Laufzeit benötigte Konfigurationsdaten durch die zweiten Dienste bereitgestellt. Auf diese Weise ist insbesondere bei einem Ausfall des ersten Dienstes weiterhin eine Bereitstellung von lokalen Diensten möglich, denen ein aktivierter störungsfreier zweiter Dienst zugeordnet ist.

Die System- und Dienstkonfigurationsdaten können für sämtliche Rechnereinheiten des Automatisierungssystems in einer zentralen Datenbank gespeichert werden, während die System-und Dienstkonfigurationsdaten für eine ausgewählte Rechnereinheit in einer der ausgewählten Rechnereinheit zugeordneten lokalen Datenbank gespeichert werden können. Dies ermöglicht einen zuverlässigen Zugriff auf Konfigurationsdaten. Vorteilhafterweise umfassen die zentrale Datenbank und lokale Datenbanken den jeweiligen System- und Dienstkonfigurationsdaten zugeordnete Versionstabellen, die miteinander abgeglichen werden. Auf diese Weise können auch unterschiedliche Versionsstände von Konfigurationsdaten sicher und effizient verwaltet werden.

Ein Zugriff auf Konfigurationsdaten für einen lokalen Dienst kann wahlweise durch den ersten Dienst oder einen dem lokalen Dienst zugeordneten zweiten Dienst verfügbar gemacht werden. Vorzugsweise wird der Zugriff auf Konfigurationsdaten für einen lokalen Dienst bei einem Ausfall des dem lokalen Dienst zugeordneten zweiten Dienstes durch den ersten Dienst verfügbar gemacht. Dies ermöglicht einerseits eine schnelle und effiziente Verteilung von Konfigurationsdaten an Ziel-Rechnersysteme über diesen zugeordnete zweite Dienste und anderseits eine erhöhte Ausfallsicherheit durch Rückgriff auf den ersten Dienst.

Dienste des Automatisierungssystems werden bevorzugt innerhalb einer dienstorientierten Architektur durch die Rechnereinheiten bereitgestellt. Dienstorientierte bzw. serviceorientierte Architekturen (SOA) zielen darauf ab, Dienste in komplexen Organisationseinheiten zu strukturieren und für eine Vielzahl von Nutzern verfügbar zu machen. Dabei werden beispielsweise vorhandene Komponenten eines Datenverarbeitungssystems, wie Programme, Datenbanken, Server oder Websites, so koordiniert, daß von den Komponenten bereitgestellte Leistungen zu Diensten zusammen gefaßt und berechtigten Nutzern zur Verfügung gestellt werden. Serviceorientierte Architekturen ermöglichen eine Anwendungsintegration, indem Komplexität einzelner Teilkomponenten eines Datenverarbeitungssystems hinter standardisierten Schnittstellen verborgen wird. Hieraus resultiert eine besonders sichere und flexible Bereitstellung einer Steuerungsinformation für ein rechnerbasiertes Objekt in einem Automatisierungssystem.

Das erfindungsgemäße Automatisierungssystem umfaßt mehrere über ein Kommunikationsnetz miteinander verbundene Rechnereinheiten zur Bereitstellung von Funktionen des Automatisierungssystems als Dienste, die mittels Systemkonfigurationsdaten und Dienstkonfigurationsdaten konfigurierbar und aktivierbar sind. Außerdem ist eine Steuerungs- und Überwachungseinheit zur Bereitstellung von Systemkonfigurationsdaten vorgesehen, die Informationen zur Zuordnung von Diensten zu bereitstellenden Rechnereinheiten und zu Abhängigkeiten zwischen Diensten umfassen.

Des weiteren weist das erfindungsgemäße Automatisierungssystem eine Rechnereinheit zur Bereitstellung eines ersten Dienstes für eine Übernahme der Systemkonfigurationsdaten von der Steuerungs- und Überwachungseinheit sowie für eine Überprüfung und Weiterleitung der Systemkonfigurationsdaten an Ziel-Rechnereinheiten auf. Darüber hinaus ist zumindest eine Ziel-Rechnereinheit zur Bereitstellung eines zweiten Dienstes für eine Überprüfung der Systemkonfigurationsdaten, für eine Bereitstellung von für eine Aktivierung lokaler Dienste benötigten Ressourcen und für eine Aktivierung eines lokalen Diensts anhand der Dienstkonfigurationsdaten vorgesehen. Ferner ist eine Systemkomponente zur Übermittlung der Dienstkonfigurationsdaten nach einer erfolgreichen Systemkonfiguration an die Ziel-Rechnereinheiten vorgesehen, die beispielsweise der Steuerungs- und Überwachungseinheit oder der Rechnereinheit zur Bereitstellung des ersten Dienstes zugeordnet sein kann.

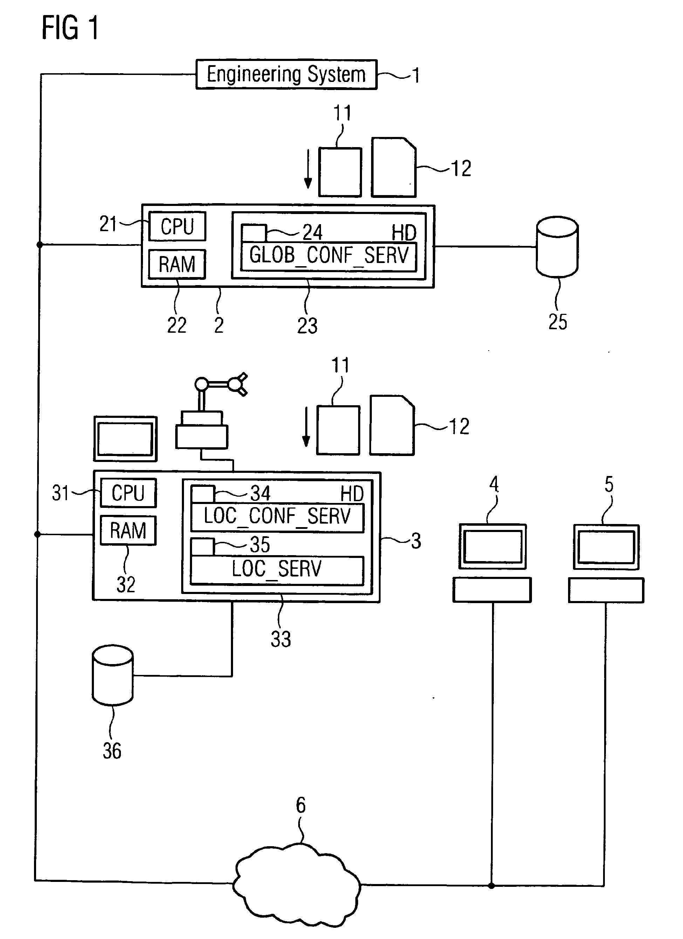

Die Erfindung wird nachfolgend an einem Ausführungsbeispiel anhand der Zeichnung näher erläutert. Es zeigt
- Figur 1: eine schematische Darstellung eines Automatisierungssystems mit mehreren über ein Kommunikationsnetz miteinander verbundenen Rechnereinheiten,
- Figur 2: ein Diagramm zu einem Austausch von Meldungen für eine Bereitstellung von Konfigurationsdaten an Ziel-Rechnereinheiten,
- Figur 3: ein Diagramm zu einem Austausch von Meldungen für eine Aktivierung von lokalen Diensten anhand der bereitgestellten Konfigurationsdaten.

Das in der Figur dargestellte Automatisierungssystem umfaßt ein Engineering-System 1, eine erste Rechnereinheit 2 und mehrere zweite Rechnereinheiten 3-5, die als Netzknoten über ein Kommunikationsnetz 6 miteinander verbunden sind. Die zweiten Rechnereinheiten 3-5 stellen Funktionen des Automatisierungssystems als lokale Dienste bereit, die mittels Systemkonfigurationsdaten und Dienstkonfigurationsdaten konfiguriert und aktiviert werden.

Das Engineering-System 1 dient zur Konfiguration, Wartung, Inbetriebnahme und Dokumentation des Automatisierungssystems und stellt Systemkonfigurationsdaten 11 bereit. Die Systemkonfigurationsdaten 11 umfassen Informationen zur Zuordnung von Diensten zu zweiten Rechnereinheiten 3-5 und zu Abhängigkeiten zwischen Diensten. Die Systemkonfigurationsdaten 11 werden an die erste Rechnereinheit 2 übermittelt und durch einen von der ersten Rechnereinheit 2 bereitgestellten globalen Konfigurations- und Aktivierungsdienst überprüft und an die jeweilige zweite Rechnereinheit 3-5 weitergeleitet.

Die Systemkonfigurationsdaten 11 werden durch von den zweiten Rechnereinheiten 3-5 bereitgestellte lokale Konfigurierungs-und Aktivierungsdienste überprüft und zur Bereitstellung von Ressourcen verwendet, die für eine Aktivierung lokaler Dienste benötigt werden. Nach einer erfolgreichen Systemkonfiguration werden die Dienstkonfigurationsdaten 12 vom Engineering-System 1 an die zweiten Rechnereinheiten 3-5 übermittelt. Anhand der Dienstkonfigurationsdaten 12 wird der jeweilige lokale Dienst durch einen diesem zugeordneten lokalen Konfigurierungs- und Aktivierungsdienst aktiviert. Außerdem werden durch die lokalen Konfigurierungs- und Aktivierungsdienste zur Laufzeit der lokalen Dienste benötigte Konfigurationsdaten bereitgestellt.

Die erste Rechnereinheit 2 und die zweiten Rechnereinheiten 3-5 umfassen zumindest jeweils einen Prozessor 21, 31, einen Arbeitsspeicher 22, 32 und eine Festplatte 23, 33 zur nichtflüchtigen Speicherung von Programmcode, Anwendungsdaten und Benutzerdaten. Auf der Festplatte 23 der ersten Rechnereinheit 2 ist Programmcode 24 zur Bereitstellung des globalen Konfigurierungs- und Aktivierungsdienstes gespeichert. Des weiteren ist auf der Festplatte 33 einer zweiten Rechnereinheit 3 Programmcode 34 zur Bereitstellung eines lokalen Konfigurierungs- und Aktivierungsdienstes sowie Programmcode 35 zur Bereitstellung eines lokalen Dienstes gespeichert. Der lokale Dienst dient im vorliegenden Ausführungsbeispiel beispielsweise zur Ansteuerung meßtechnischer oder aktorische Peripherie, wie Sensoren oder Roboter. Der auf den Festplatten 23, 33 gespeicherte Programmcode 24, 34, 35 ist in den Arbeitsspeicher 22, 32 der Rechnereinheiten 2, 3 ladbar und durch den jeweiligen Prozessor 21, 31 zur Bereitstellung obiger Dienste ausführbar.

Die System- und Dienstkonfigurationsdaten 11, 12 für sämtliche durch die zweiten Rechnereinheiten 3-5 bereitgestellten lokalen Dienste werden in einer globalen Datenbank 25 der ersten Rechnereinheit gespeichert. Zusätzlich werden System-und Dienstkonfigurationsdaten aus Redundanz- und Performanzgründen für einen ausgewählten lokalen Dienst in einer lokalen Datenbank 36 einer zweiten Rechnereinheit 3 gespeichert, die dem ausgewählten lokalen Dienst zugeordnet ist. Ein Zugriff auf Konfigurationsdaten für einen lokalen Dienst kann sowohl durch den globalen Konfigurierungs- und Aktivierungsdienst als auch durch einen lokalen Konfigurierungs- und Aktivierungsdienst verfügbar gemacht werden. Vorzugsweise wird der Zugriff auf Konfigurationsdaten für einen lokalen Dienst bei einem Ausfall des jeweiligen lokalen Konfigurierungs- und Aktivierungsdienstes durch den globalen Konfigurierungs- und Aktivierungsdienst verfügbar gemacht.

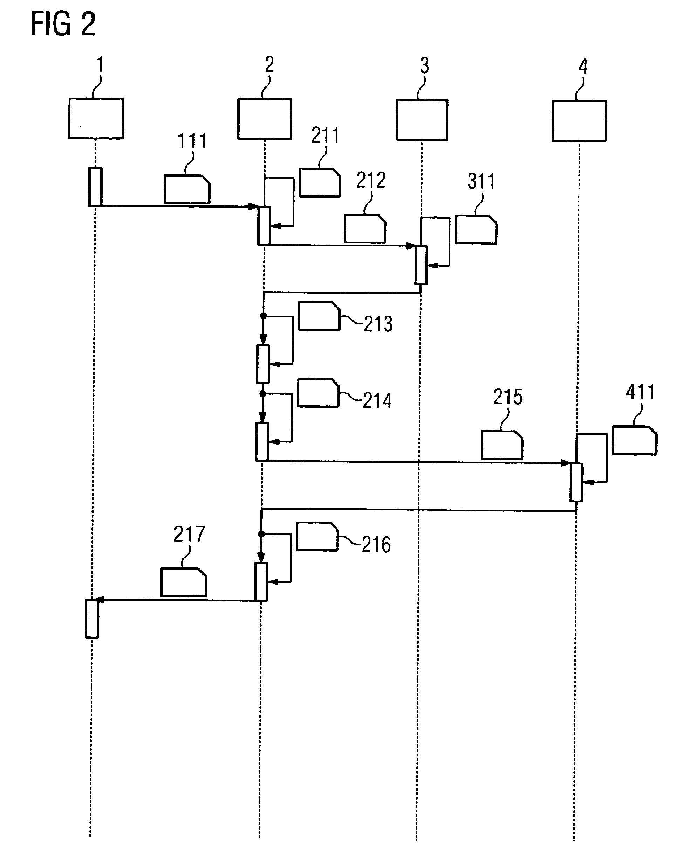

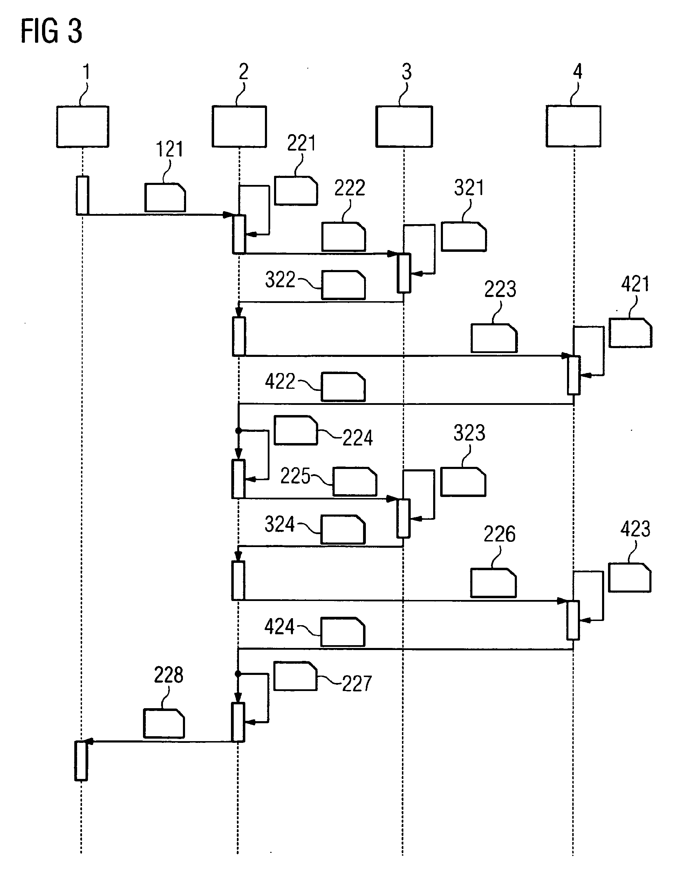

Da Bereitstellung und Aktivierung von Konfigurationsdaten zwei getrennte Schritte sind, wird der Austausch von Meldungen zur Steuerung der Bereitstellung bzw. Aktivierung in jeweils einem separaten Diagramm entsprechend Figur 2 und Figur 3 dargestellt. Die in den Figuren 2 und 3 dargestellten Meldungen umfassen auch zwischen computerbasierten Objekten eines Laufzeitsystems ausgetauschte interne Meldungen zur Initiierung von Funktionsaufrufen.

Entsprechend Figur 2 wird zur Bereitstellung der Konfigurationsdaten zunächst eine Meldung 111 mit den bereitzustellenden Konfigurationsdaten vom Engineering-System 1 an die erste Rechnereinheit 2 übermittelt. Anschließend wird in der ersten Rechnereinheit 2 per Meldung 211 eine Durchführung einer Konsistenzüberprüfung der übermittelten Konfigurationsdaten angefordert. Bei erfolgreicher Konsistenzüberprüfung übermittelt die erste Rechnereinheit 2 eine Meldung 212 mit den überprüften Konfigurationsdaten an eine zweite Rechnereinheit 3, die einen ersten lokalen Dienst bereitstellt.

Die globale Datenbank und die lokalen Datenbanken umfassen den jeweiligen System- und Dienstkonfigurationsdaten zugeordnete Versionstabellen, die miteinander abgeglichen werden. Aus diesem Grund wird nach Empfang der Konfigurationsdaten durch die den ersten lokalen Dienst bereitstellende Rechnereinheit 3 per Meldung 311 eine Aktualisierung der dortigen Versionstabelle angefordert.

Bei erfolgreicher Aktualisierung wird eine Aktualisierung der in der globalen Datenbank gespeicherten Versionstabelle mittels einer Meldung 213 angefordert. Anschließend wird im vorliegenden Ausführungsbeispiel per Meldung 214 eine Konsistenzüberprüfung für Konfigurationsdaten angefordert, die für eine weitere zweite Rechnereinheit 4 bestimmt sind, durch die ein zweiter lokaler Dienst verfügbar gemacht wird. Bei erfolgreicher Konsistenzüberprüfung wird eine Meldung 215 mit den überprüften Konfigurationsdaten an die weitere zweite Rechnereinheit 4 übermittelt. Analog zu obiger Vorgehensweise wird per Meldung 411 eine Aktualisierung der Versionstabelle angefordert, die in der lokalen Datenbank der weiteren zweiten Rechnereinheit 4 gespeichert ist. Bei erfolgreicher Aktualisierung wird nachfolgend mittels einer Meldung 216 eine Aktualisierung der in der globalen Datenbank gespeicherten Versionstabelle angefordert. Ist auch dies erfolgreich verlaufen, übermittelt die erste Rechnereinheit 2 abschließend eine Meldung 217 an das Engineering-System 2 über eine erfolgreiche Bereitstellung der Konfigurationsdaten für den ersten und zweiten lokalen Dienst.

Entsprechend Figur 3 wird zur Aktivierung der Konfigurationsdaten zunächst eine Meldung 121 vom Engineering-System 1 an die erste Rechnereinheit 2 übermittelt. Anschließend fragt die erste Rechnereinheit 2 per Meldung 221 ab, ob Konfigurationsdaten zur Aktivierung bereitgestellt worden sind. Stehen Konfigurationsdaten zur Aktivierung bereit, übermittelt die erste Rechnereinheit 2 eine Meldung 222 an die zweite Rechnereinheit 3 zur Einleitung einer Vorbereitungsphase für ein Laden der Dienstkonfigurationsdaten. Mittels einer Meldung 321 veranlaßt die zweite Rechnereinheit 3 die Einleitung der Vorbereitungsphase und übermittelt bei erfolgreicher Vorbereitungsphase eine Meldung 322 hierüber an die erste Rechnereinheit 2.

In analoger Weise wird mittels einer an die weitere zweite Rechnereinheit 4 gerichteten Meldung 223 eine Vorbereitungsphase für ein Laden der Dienstkonfigurationsdaten eingeleitet. Entsprechend obigen Ausführungen veranlaßt die weitere zweite Rechnereinheit 4 mittels einer Meldung 421 die Einleitung der Vorbereitungsphase und übermittelt bei erfolgreicher Vorbereitungsphase eine entsprechende Meldung 422 an die erste Rechnereinheit 2. Anschließend wird eine Meldung 224 zur Zusammenfassung und Überprüfung von Ergebnissen der einzelnen Vorbereitungsphasen an die erste Rechnereinheit 2 übermittelt.

Nach erfolgreicher Beendigung der Vorbereitungsphasen wird zur Einleitung einer Abschlußphase bzw. Commit-Phase eine Meldung 225 an die zweite Rechnereinheit 3 übermittelt. Mittels einer Meldung 323 veranlaßt die zweite Rechnereinheit 3 eine Bereitstellung des ersten lokalen Diensts in einer Abschlußphase unter Verwendung der in der Vorbereitungsphase geladenen Dienstkonfigurationsdaten. Bei erfolgreicher Abschlußphase übermittelt die zweite Rechnereinheit 3 eine Bestätigungsmeldung 324 an die erste Rechnereinheit 2.

In analoger Weise wird zur Einleitung einer Abschlußphase für die weitere zweite Rechnereinheit 4 eine Meldung 226 an die weitere zweite Rechnereinheit 4 übermittelt. Mittels einer Meldung 423 veranlaßt die weitere zweite Rechnereinheit 4 eine Bereitstellung des zweiten lokalen Diensts in einer Abschlußphase unter Verwendung der in der Vorbereitungsphase geladenen Dienstkonfigurationsdaten. Bei erfolgreicher Abschlußphase übermittelt die weitere zweite Rechnereinheit 4 eine entsprechende Bestätigungsmeldung 424 an die erste Rechnereinheit 2.

Abschließend wird eine Meldung 227 zur Zusammenfassung und Überprüfung von Ergebnissen der einzelnen Abschlußphasen an die erste Rechnereinheit 2 übermittelt. Bei erfolgreicher Beendigung der Abschlußphasen übermittelt die erste Rechnereinheit 2 eine Meldung 228 über eine erfolgreiche Aktivierung des ersten und des zweiten lokalen Diensts an das Engineering-System 1.

Bei einem Fehlschlagen der Vorbereitungs- oder Abschlußphase werden der erste und der zweite lokale Dienst in einer Zurücksetzphase unter Verwendung von einem letzten fehlerfreien Status zugeordneten Dienstkonfigurationsdaten bereitgestellt. Dies erfolgt anhand von Versionsinformationen, die in Versionstabellen gespeichert sind. Vorzugsweise sind die System-und Dienstkonfigurationsdaten für sämtliche Rechnereinheiten des Automatisierungssystems in der globalen Datenbank 25 der ersten Rechnereinheit 2 gespeichert. Zusätzlich können die System- und Dienstkonfigurationsdaten für eine ausgewählte Rechnereinheit in einer der ausgewählten Rechnereinheit zugeordneten lokalen Datenbank gespeichert werden. Die zentrale Datenbank und etwaige lokale Datenbanken umfassen den jeweiligen dort gespeicherten System- und Dienstkonfigurationsdaten zugeordnete Versionstabellen, die miteinander abgeglichen werden.

Die Anwendung der vorliegenden Erfindung ist nicht auf das beschriebene Ausführungsbeispiel beschränkt.

## Patentansprüche

1. Verfahren zum Betrieb eines mehrere vernetzte Rechnereinheiten umfassenden industriellen Automatisierungssystems, bei dem
- Funktionen des Automatisierungssystems durch Dienste von den Rechnereinheiten bereitgestellt werden,
- die Dienste mittels Systemkonfigurationsdaten und Dienstkonfigurationsdaten konfiguriert und aktiviert werden, wobei die Systemkonfigurationsdaten Informationen zur Zuordnung von Diensten zu bereitstellenden Rechnereinheiten und zu Abhängigkeiten zwischen Diensten umfassen,
- die Systemkonfigurationsdaten durch einen ersten Dienst von einer Steuerungs- und Überwachungseinheit des Automatisierungssystems übernommen, überprüft und an Ziel-Rechnereinheiten weitergeleitet werden,
- die Systemkonfigurationsdaten durch von den Ziel-Rechnereinheiten bereitgestellte zweite Dienste überprüft und zur Bereitstellung von Ressourcen verwendet werden, die für eine Aktivierung lokaler Dienste benötigt werden,
- die Dienstkonfigurationsdaten nach einer erfolgreichen Systemkonfiguration an die Ziel-Rechnereinheiten übermittelt werden,
- ein lokaler Dienst durch eine diesem zugeordnete Ziel-Rechnereinheit anhand der Dienstkonfigurationsdaten aktiviert wird.

2. Verfahren nach Anspruch 1,
bei dem für eine Aktivierung eines lokalen Dienstes in einer Vorbereitungsphase zunächst die Dienstkonfigurationsdaten geladen und der lokale Dienst in einer Abschlußphase unter Verwendung der in der Vorbereitungsphase geladenen Dienstkonfigurationsdaten bereitgestellt wird, und bei dem der lokale Dienst bei einem Fehlschlagen der Vorbereitungs- und/oder Abschlußphase in einer Zurücksetzphase unter Verwendung von einem letzten fehlerfreien Status zugeordneten Dienstkonfigurationsdaten bereitgestellt wird.

3. Verfahren nach Anspruch 2,
bei dem der lokale Dienst auf mehrere Rechnereinheiten verteilte Dienstkomponenten umfaßt.

4. Verfahren nach einem der Ansprüche 1 bis 3,
bei dem zur Laufzeit benötigte Konfigurationsdaten durch die zweiten Dienste bereitgestellt werden.

5. Verfahren nach einem der Ansprüche 1 bis 4,
bei dem die System- und Dienstkonfigurationsdaten für sämtliche Rechnereinheiten des Automatisierungssystems in einer zentralen Datenbank gespeichert werden, und bei dem die System- und Dienstkonfigurationsdaten für eine ausgewählte Rechnereinheit in einer der ausgewählten Rechnereinheit zugeordneten lokalen Datenbank gespeichert werden.

6. Verfahren nach Anspruch 5,
bei dem die zentrale Datenbank und lokale Datenbanken den jeweiligen dort gespeicherten System- und Dienstkonfigurationsdaten zugeordnete Versionstabellen umfassen, die miteinander abgeglichen werden.

7. Verfahren nach einem der Ansprüche 1 bis 6,
bei dem ein Zugriff auf Konfigurationsdaten für einen lokalen Dienst wahlweise durch den ersten Dienst oder einen dem lokalen Dienst zugeordneten zweiten Dienst verfügbar gemacht wird.

8. Verfahren nach Anspruch 7,
bei dem der Zugriff auf Konfigurationsdaten für einen lokalen Dienst bei einem Ausfall des dem lokalen Dienst zugeordneten zweiten Dienstes durch den ersten Dienst verfügbar gemacht wird.

9. Verfahren nach einem der Ansprüche 1 bis 8,
bei dem Dienste des Automatisierungssystems innerhalb einer dienstorientierten Architektur durch die Rechnereinheiten bereitgestellt werden.

10. Verfahren nach einem der Ansprüche 1 bis 9,
bei dem die Steuerungs- und Überwachungseinheit ein Engineering-System zur Konfiguration, Wartung, Inbetriebnahme und/oder Dokumentation des Automatisierungssystems ist.

11. Industrielles Automatisierungssystem mit
- mehreren über ein Kommunikationsnetz miteinander verbundenen Rechnereinheiten zur Bereitstellung von Funktionen des Automatisierungssystems als Dienste, die mittels Systemkonfigurationsdaten und Dienstkonfigurationsdaten konfigurierbar und aktivierbar sind,
- einer Steuerungs- und Überwachungseinheit zur Bereitstellung von Systemkonfigurationsdaten, die Informationen zur Zuordnung von Diensten zu bereitstellenden Rechnereinheiten und zu Abhängigkeiten zwischen Diensten umfassen,
- einer Rechnereinheit zur Bereitstellung eines ersten Dienstes für eine Übernahme der Systemkonfigurationsdaten von der Steuerungs- und Überwachungseinheit sowie für eine Überprüfung und Weiterleitung der Systemkonfigurationsdaten an Ziel-Rechnereinheiten,
- zumindest einer Ziel-Rechnereinheit zur Bereitstellung eines zweiten Dienstes für eine Überprüfung der Systemkonfigurationsdaten, für eine Bereitstellung von für eine Aktivierung lokaler Dienste benötigten Ressourcen und für eine Aktivierung eines lokalen Diensts anhand der Dienstkonfigurationsdaten,
- einer Systemkomponente zur Übermittlung der Dienstkonfigurationsdaten nach einer erfolgreichen Systemkonfiguration an die Ziel-Rechnereinheiten.

## Claims

1. Method for operating an industrial automation system comprising a plurality of networked computer units, in which
- functions of the automation system are provided by services of the computer units,
- the services are configured and activated using system configuration data and service configuration data, the system configuration data comprising information for assigning services to providing computer units and to dependencies between services,
- the system configuration data are accepted and checked by a first service of a control and monitoring unit of the automation system and are forwarded to target computer units,
- the system configuration data are checked by second services provided by the target computer units and are used to provide resources needed to activate local services,
- the service configuration data are transmitted to the target computer units following successful system configuration,
- a local service is activated by a target computer unit assigned to said service using the service configuration data.

2. Method according to Claim 1,
in which the service configuration data are first of all loaded in a preparation phase in order to activate a local service and the local service is provided in a final phase using the service configuration data loaded in the preparation phase, and in which, if the preparation and/or final phase fail(s), the local service is provided in a reset phase using service configuration data assigned to a last fault-free status.

3. Method as claimed in Claim 2,
in which the local service comprises service components distributed among a plurality of computer units.

4. Method as claimed in one of Claims 1 to 3,
in which configuration data needed at the run time are provided by the second services.

5. Method as claimed in one of Claims 1 to 4,
in which the system and service configuration data for all computer units of the automation system are stored in a central database, and in which the system and service configuration data for a selected computer unit are stored in a local database assigned to the selected computer unit.

6. Method as claimed in Claim 5,
in which the central database and local databases comprise version tables which are assigned to the respective system and service configuration data stored there and are matched to one another.

7. Method as claimed in one of Claims 1 to 6,
in which access to configuration data for a local service is made available either by the first service or by a second service assigned to the local service.

8. Method as claimed in Claim 7,
in which, if the second service assigned to the local service fails, access to configuration data for a local service is made available by the first service.

9. Method as claimed in one of Claims 1 to 8,
in which services of the automation system are provided by the computer units within a service-oriented architecture.

10. Method as claimed in one of Claims 1 to 9,
in which the control and monitoring unit is an engineering system for configuring, maintaining, starting up and/or documenting the automation system.

11. Industrial automation system having
- a plurality of computer units which are connected to one another via a communication network and are intended to provide functions of the automation system in the form of services which can be configured and activated using system configuration data and service configuration data,
- a control and monitoring unit for providing system configuration data which comprise information for assigning services to providing computer units and to dependencies between services,
- a computer unit for providing a first service for accepting the system configuration data from the control and monitoring unit and for checking the system configuration data and forwarding the latter to target computer units,
- at least one target computer unit for providing a second service for checking the system configuration data, for providing resources needed to activate local services and for activating a local service using the service configuration data,
- a system component for transmitting the service configuration data to the target computer units following successful system configuration.

## Revendications

1. Procédé pour faire fonctionner un système industriel d'automatisation comprenant plusieurs unités informatiques en réseau, dans lequel
- on procure des fonctions du système d'automatisation par des services des unités informatiques,
- on configure et on active les services au moyen de données de configuration de système et de données de configuration de service, les données de configuration de système comprenant des informations pour l'association de services à des unités informatiques à disposition pour des dépendances entre services,
- les données de configuration de système étant prises en charge par un premier service d'une unité de commande et de contrôle du système d'automatisation, contrôlées et acheminées à des unités informatiques cibles,
- les données de configuration de système sont contrôlées par des deuxièmes services mis à disposition par les unités informatiques cibles et sont utilisées pour la mise à disposition de ressources qui sont nécessaires pour une activation de services locaux,
- les données de configuration de service sont transmises aux unités informatiques cibles après une configuration de système réussie,
- un service local est activé par une unité informatique cible qui lui est associée au moyen des données de configuration de service.

2. Procédé suivant la revendication 1,
dans lequel, pour une activation d'un service local dans une phase de préparation, tout d'abord, les données de configuration de service sont chargées et le service local est préparé dans une phase finale en utilisant les données de configuration de service chargées dans la phase de préparation, et dans lequel le service local met à disposition, en cas de raté de la phase de préparation et/ou de fin dans une phase de retour à l'état initial, des données de configuration de service associées à un dernier statut sans erreur.

3. Procédé suivant la revendication 2,
dans lequel le service local comprend des composants de services répartis sur plusieurs unités informatiques.

4. Procédé suivant l'une des revendications 1 à 3,
dans lequel des données de configuration nécessaires pour le temps de marche sont mises à disposition par les deuxièmes services.

5. Procédé suivant l'une des revendications 1 à 4,
dans lequel les données de configuration de système et de services pour toutes les unités informatiques du système d'automatisation sont mémorisées dans une base centrale de données et dans lequel les données de configuration de système et de services pour une unité informatique sélectionnée sont mémorisées dans une base de données locale associée à l'unité informatique sélectionnée.

6. Procédé suivant la revendication 5,
dans lequel la base de données centrale et les bases de données locales comprennent des tables de version adaptées entre elles et associées aux données respectives de configuration de système et de services qui y sont mémorisées.

7. Procédé suivant l'une des revendications 1 à 6,
dans lequel un accès aux données de configuration pour un service local est rendu disponible au choix par le premier service ou par un deuxième service associé au service local.

8. Procédé suivant la revendication 7,
dans lequel l'accès à des données de configuration pour un service local est rendu disponible par le premier service, si le deuxième service associé au service local est défaillant.

9. Procédé suivant l'une des revendications 1 à 8,
dans lequel des services du système d'automatisation sont mis à disposition par les unités informatiques au sein d'une architecture orientée service.

10. Procédé suivant l'une des revendications 1 à 9,
dans lequel l'unité de commande et de contrôle est un système d'ingénierie pour la configuration, l'entretien, la mise en fonctionnement et/ou la documentation du système d'automatisation.

11. Système d'automatisation industriel comprenant
- plusieurs unités informatiques reliées entre elles par un réseau de communication pour la mise à disposition de fonctions du système d'automatisation en tant que services, qui peuvent être configurées et activées au moyen de données de configuration de système et de données de configuration de service,
- une unité de commande et de contrôle pour mettre à disposition des données de configuration de système, qui comprennent des informations pour l'association de services à des unités informatiques à préparer et pour des dépendances entre services,
- une unité informatique pour la mise à disposition d'un premier service de prise en charge des données de configuration de système par l'unité de commande et de contrôle, ainsi que pour un contrôle et un acheminement des données de configuration de système à des unités informatiques cibles,
- au moins une unité informatique cible de mise à disposition d'un deuxième service pour un contrôle des données de configuration de système pour une mise à disposition de ressources nécessaires pour une activation de services locaux et pour une activation d'un service local au moyen des données de configuration de service,
- un composant de système pour la transmission des données de configuration de service après qu'une configuration de système a été couronnée de succès aux unités informatiques cibles.
